# EUROPÄISCHE PATENTANMELDUNG

(11) **EP 4 173 927 A1**
(43) Veröffentlichungstag der Anmeldung: **03.05.2023**
(21) Anmeldenummer: 21204717.9
(22) Anmeldetag: 26.10.2021
(51) Int. Cl.: B62D 5/00

(54) **FEEDBACK-AKTUATOR FÜR EIN KRAFTFAHRZEUG-LENKSYSTEM, LENKSYSTEM FÜR EIN KRAFTFAHRZEUG, UND VERFAHREN ZUR ERZEUGUNG EINES LENKUNGS-FEEDBACKS IN EINEM KRAFTFAHRZEUG-LENKSYSTEM**

(71) Anmelder: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Bayer, Tim, 9450 Lüchingen (CH)
(74) Vertreter: thyssenkrupp Intellectual Property GmbH

(57) **Zusammenfassung**

Die vorliegende Erfindung betrifft einen Feedback-Aktuator für ein Kraftfahrzeug-Lenksystem, umfassend eine um eine Längsachse (L) drehbar gelagerte Lenkhandhabe zur Eingabe manueller Lenkbefehle und einer Drehmomenterzeugungseinrichtung (7, 8), die ausgebildet ist zur Erzeugung eines auf die Lenkhandhabe wirkenden Feedback-Moments (M, A), und die eine an die Lenkhandhabe angekoppelte aktive Antriebsvorrichtung (7) aufweist. Um eine kompaktere Bauform mit geringerem Gewicht und einen geringeren Energieverbrauch zu ermöglichen, schlägt die Erfindung vor, dass die Drehmomenterzeugungseinrichtung (7, 8) eine passive Reaktionsvorrichtung (8) aufweist, die ausgebildet ist zur Erzeugung eines auf die Lenkhandhabe rückwirkenden Reaktionsmoments (M) aus einem in die Lenkhandhabe zur Eingabe eines Lenkbefehls eingebrachten Handmoments.

## Beschreibung

### Stand der Technik

Die Erfindung betrifft einen Feedback-Aktuator für ein Kraftfahrzeug-Lenksystem, umfassend eine um eine Längsachse drehbar gelagerte Lenkhandhabe zur Eingabe manueller Lenkbefehle und einer Drehmomenterzeugungseinrichtung, die ausgebildet ist zur Erzeugung eines auf die Lenkhandhabe wirkenden Feedback-Moments, und die eine an die Lenkhandhabe angekoppelte aktive Antriebsvorrichtung aufweist. Ein Kraftfahrzeug-Lenksystem und ein Verfahren zur Erzeugung eines Lenkungs-Feedbacks in einem Kraftfahrzeug-Lenksystem sind ebenfalls Gegenstand der Erfindung.

Steer-by-Wire-Lenksysteme für Kraftfahrzeuge können manuelle Lenkbefehle des Fahrers wie konventionelle mechanische Lenkungen durch Drehung einer Lenkhandhabe, beispielsweise eines Lenkrades einer Eingabeeinheit entgegennehmen, welches am fahrerseitigen, hinteren Ende der Lenksäule angebracht ist. Die Lenkhandhabe ist jedoch nicht wie bei einem konventionellen Lenksystem mechanisch über eine Lenkwelle und ein Lenkgetriebe mit den zu lenkenden Rädern verbunden, sondern wirkt mit Drehwinkel- bzw. Drehmomentsensoren zusammen, die den eingebrachten Lenkbefehl erfassen und daraus ein elektrisches Steuersignal erzeugen, und an einen elektromotorischen Lenksteller abgeben, der mittels eines elektrischen Stellantriebs einen dem Lenkbefehl entsprechenden Lenkeinschlag der Räder einstellt.

Durch die fehlende mechanische Kopplung erhält der Fahrer bei Steer-by-Wire-Systemen von den gelenkten Rädern keine unmittelbare physische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände auf die Lenkhadhabe zurück übertragen wird. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator kann bevorzugt in die Lenksäule oder die Lenkhandhabe integriert sein und weist eine Drehmomenterzeugungseinrichtung auf, die abhängig vom Rückkopplungs-Signal ein dem realen Reaktionsmoment entsprechendes Rückstellmoment oder Feedback-Moment in die Lenkhandhabe einkoppelt. Derartige "Force-feedback"-Systeme geben dem Fahrer den Eindruck einer realen Fahrsituation wie bei einer konventionellen Lenkung, was eine intuitive Reaktion erleichtert. Der Feedback-Aktuator kann eine mit der Lenkhandhabe verbundene, in der Lenksäule drehbar gelagerten Lenkwelle antreiben, oder auch in die drehbare Lenkhandhabe selbst integriert sein.

Im Stand der sind Feedback-Aktuatoren bekannt, bei denen das Feedback-Moment durch eine an die Lenkhandhabe angekoppelte elektromotorische Antriebsvorrichtung aktiv durch extern zugeführte elektrische Energie erzeugt wird, wie beispielsweis in der DE 10 2015 213 303 A1 oder der DE 10 2008 034 730 A1 beschrieben ist. Diese werden als aktive Antriebsvorrichtungen bezeichnet.

Aktive Antriebseinrichtungen haben den Vorteil, dass das Feedback-Moment durch die extern der aktiven Antriebsvorrichtung zugeführte elektrische Energie in einem weiten Bereich unabhängig gesteuert werden kann, beispielsweise als Rückstellmoment unabhängig vom aktuell anliegenden Handmoment. Um ein relativ hohes Feedback-Moment zu generieren, beispielsweise als ein gegen das Handmoment gerichtetes Rückstellmoment bei hohen Fahrzeuggeschwindigkeiten, schnellen Lenkbewegungen, unebener Fahrbahn oder bei Parkmanövern, müssen die motorische Antriebsvorrichtung und die Steuereinrichtung entsprechend leistungsfähig ausgestaltet sein. Dadurch kann ein relativ schwerer und voluminöser Antriebsmotor erforderlich werden. Nachteilig ist zudem der relativ hohe Energieverbrauch, der im Betrieb extern zugeführt werden muss. Diese Problematik ist bei einem elektrisch antreibbaren Kraftfahrzeug von besonderer Bedeutung.

Angesichts der vorangehend erläuterten Problematik ist es eine Aufgabe der vorliegenden Erfindung, eine kompaktere Bauform mit geringerem Gewicht und einen geringeren Energieverbrauch zu ermöglichen.

### Darstellung der Erfindung

Diese Aufgabe wird erfindungsgemäß gelöst durch den Feedback-Aktuator mit den Merkmalen des Anspruchs 1, das Lenksystem gemäß Anspruch 12, sowie das Verfahren zur Erzeugung eines Lenkungs-Feedbacks gemäß Anspruch 14. Vorteilhafte Weiterbildungen ergeben sich aus den Unteransprüchen.

Bei einem Feedback-Aktuator für ein Kraftfahrzeug-Lenksystem, umfassend eine um eine Längsachse drehbar gelagerte Lenkhandhabe zur Eingabe manueller Lenkbefehle und einer Drehmomenterzeugungseinrichtung, die ausgebildet ist zur Erzeugung eines auf die Lenkhandhabe wirkenden Feedback-Moments, und die eine an die Lenkhandhabe angekoppelte aktive Antriebsvorrichtung aufweist, ist erfindungsgemäß vorgesehen, dass die Drehmomenterzeugungseinrichtung eine passive Reaktionsvorrichtung aufweist, die ausgebildet ist zur Erzeugung eines auf die Lenkhandhabe rückwirkenden Reaktionsmoments aus einem in die Lenkhandhabe zur Eingabe eines Lenkbefehls eingebrachten Handmoments.

Gemäß der Erfindung ist zusätzlich zu der bekannten aktiven Drehmomenterzeugungseinrichtung eine passive Drehmomenterzeugungseinrichtung vorgesehen. Während die aktive Antriebsvorrichtung, die im Folgenden gleichbedeutend auch als Aktivantrieb oder Aktivmittel bezeichnet wird, wie eingangs beschrieben durch extern zugeführte Energie aktiv ein Feedback-Moment erzeugt und an die Lenkhandhabe abgibt, erzeugt die erfindungsgemäße Reaktionsvorrichtung, sie auch kurz als Passivmittel bezeichnet, ein Feedback-Moment ausschließlich passiv als Reaktionsmoment, auch als Passivmoment bezeichnet, als Reaktion auf ein manuell in die Lenkhandhabe eingegebenes Handmoment.

Das gesamte, an der Lenkhandhabe anstehende Gesamt-Feedback-Moment wird erfindungsgemäß bereitgestellt durch die Summe des von der motorischen Antriebsvorrichtung erzeugten aktiven Antriebsmoments (Aktivmoments) und des von der Reaktionsvorrichtung erzeugten passiven Reaktionsmoment (Passivmoments). Das Aktivmoment und das Passivmoment werden überlagert. Das erfindungsgemäße Passivmittel stellt bereits zumindest einen Teilbetrag des gesamten Gesamt-Feedback-Moments bereit. Entsprechend muss von dem Aktivantrieb nur noch der verbleibende Teilbetrag zur Realisierung eines vorgegebenen Gesamt-Feedback-Moments generiert werden. Dadurch ist die erforderliche Leistung des Aktivantriebs geringer als im Stand der Technik, und entsprechend kann der Aktivantrieb in vorteilhafter Weise kompakter und leichter dimensioniert sein.

Ein weiterer wesentlicher Vorteil ist der im Vergleich zum Stand der Technik reduzierte Energieverbrauch des Aktivantriebs. Der geringere elektrische Strombedarf ist insbesondere vorteilhaft bei Elektrofahrzeugen, bei denen eine optimale Nutzung der gespeicherten elektrischen Energie von besonderer Bedeutung ist.

Die aktive Antriebsvorrichtung kann aufgebaut sein, wie dies im Prinzip aus dem Stand der Technik bekannt ist. Dabei ist ein elektrischer Motor drehmomentschlüssig mit der Lenkhandhabe gekuppelt. Der Motor kann eine in der Lenksäule um ihre Längsachse drehbar gelagerte Lenkwelle oder Lenkspindel antreiben, an der die Lenkhandhabe angebracht ist. Es ist auch möglich, dass der Aktivantrieb in die Lenkhandhabe integriert ist, beispielsweise als drehend antreibbares Kranzelement eines Lenkrads.

Die elektrische Ansteuerung der aktiven Antriebsvorrichtung erfolgt durch eine Steuereinheit, welche abhängig von Betriebsparametern, ein Soll-Feedback-Moment bestimmt und unter Einbeziehung des von der erfindungsgemäßen Reaktionsvorrichtung bereitgestellten Passivmoments den Motor zur Generierung eines Aktivmoments ansteuert. Dabei wird das Aktivmoment derart eingestellt, dass die Summe des Aktivmoments und des Passivmoments als Gesamt-Feedback-Moment auf die Lenkhandhabe wirkt.

Es kann bevorzugt vorgesehen sein, dass die Reaktionsvorrichtung ausgebildet ist zur Bereitstellung eines Grundmoments, und die Antriebsvorrichtung ausgebildet ist zur Erzeugung eines Zusatzmoments, welches dem Grundmoment überlagerbar ist. Das Grundmoment, auch als Grunddrehmoment bezeichnet, wird von der Reaktionsvorrichtung durchgehend im gesamten Betrieb rein passiv auf die Lenkhandhabe ausgeübt, beispielsweise als Reaktionsmoment entgegen einem in die Lenkhandhabe eingegebenen Handmoment. Dadurch ist bereits der Vorteil realisiert, dass eine grundlegende Feedback-Funktionalität unabhängig von der aktiven Antriebsvorrichtung gewährleistet ist. Dies ist auch unter Sicherheitsaspekten vorteilhaft, beispielsweise bei einem Ausfall der aktiven Antriebseinrichtung. Durch die Ansteuerung der aktiven Antriebsvorrichtung wird das Grundmoment bei Bedarf mit einem Zusatzmoment überlagert, welches ein durch externe Energieversorgung generiertes Zusatzdrehmoment darstellt, welches erforderlich ist, um an der Lenkhandhabe ein Gesamt-Feedback-Moment zu realisieren, welches größer ist als das Grundmoment. Das Grundmoment kann angepasst sein, um das zusätzlich erforderliche Aktivmoment zu reduzieren, so dass der erforderliche Energiebedarf sowie der Bauraum und das Gewicht in vorteilhafter Weise minimiert werden können.

Es kann vorgesehen sein, dass das Grundmoment zumindest teilweise in Richtung eines aktiv generierten Antriebsmoments gerichtet ist. Beispielsweise kann es als Bremsmoment gegen ein in die Lenkhandhabe eingegebenes Handmoment gerichtet sein, welches bei Bedarf durch ein zusätzliches Aktivmoment verstärkt werden kann.

Es ist auch möglich, dass das Grundmoment zumindest teilweise entgegen einem aktiv generierten Antriebsmoment gerichtet ist. Dadurch kann das Grundmoment zumindest teilweise kompensiert oder aufgehoben werden, um ein momentanes Feedback-Moment zu erzeugen, welches kleiner ist als das Grundmoment.

Ein Zusatzmoment kann hinsichtlich Betrag und Richtung von der Antriebsvorrichtung abhängig von Funktionsparameters der Drehmomenterzeugungseinrichtung und von laufend im Fahrbetrieb erfassten Betriebsparametern im Bedarfsfall aktiv generiert werden, um im Zusammenwirken mit der passiven Reaktionsvorrichtung ein gemäß der Fahrsituation aktuell erforderliches Feedback-Moment an die Lenkhandhabe abzugeben.

Das Grundmoment kann bevorzugt größer als 1 Nm sein. Es kann mit Vorteil kleiner als 4 Nm sein.

Es kann bevorzugt vorgesehen sein, dass die Reaktionsvorrichtung eine Bremsvorrichtung aufweist. Eine Bremsvorrichtung umfasst ein passives Drehmomenterzeugungsmittel zur Erzeugung eines Feedback-Moments, nämlich eines Bremsmoments, welches einem in die Lenkhandhabe eingegebenen manuellen Lenkmoment, also einem Handmoment, als Reaktionsmoment entgegenwirkt. Eine derartige Bremsvorrichtung kann eine Reibungs- oder Friktionseinrichtung aufweisen, die mechanisch, elektrisch und/oder magnetisch oder nach anderen geeigneten Wirkprinzipien aufgebaut sein kann. Eine derartige Reibungseinrichtung greift mit einem feststehenden Reibmittel im Reibkontakt direkt oder mittelbar an der relativ dazu drehbaren Lenkhandhabe an. Dadurch wird bei einer relativen Drehung Rotationsenergie in Wärme umgewandelt, und ohne Zuführung externer Energie ein passives Bremsmoment erzeugt.

Es ist möglich, dass die Reaktionsvorrichtung eine Speichervorrichtung aufweist. Eine Speichereinrichtung umfasst Drehmomenterzeugungsmittel zur Speicherung eines durch manuelle Drehung in die Lenkhandhabe eingegebenen Handmoments. Hierzu ist ein Drehmomentspeicher oder Energiespeicher ausgebildet, der das zuvor eingespeicherte Handmoment bei Bedarf gesteuert als Reaktionsmoment wieder an die Lenkhandhabe abgeben kann. Beispielsweise kann das Reaktionsmoment als Rückstellmoment wirken, um die Lenkhandhabe aus einem Lenkeinschlag größer als null in die neutrale Nulllage zurück zu bewegen. Auf diese Weise kann bereits ohne externe Energieversorgung der aktiven Antriebsvorrichtung eine selbsttätige Rückstellung in die Geradeausfahr realisiert werden, wie dies von konventionellen, mechanisch gekoppelten Lenkungen bekannt ist. Dadurch, dass die aktive Ansteuerung der motorischen Antriebsvorrichtung bedarfsweise nicht oder nur in geringerem Umfang erforderlich ist als bei einem gattungsgemäßen rein aktiven Feedback-Aktuator, ist eine geringere Antriebsleistung erforderlich, wodurch die oben genannten Vorteile realisiert werden können. Zusätzlich kann die Fahrzeugsicherheit bei einer Störung der aktiven Antriebsvorrichtung erhöht werden.

Die Speichervorrichtung kann beispielsweise einen Federspeicher aufweisen, in dem ein elastisches Federelement durch manuelle Drehung der Lenkhandhabe elastisch gespannt wird, und dadurch, vorzugsweise bei einer Auslenkung aus der Nulllage, ein manuellen Drehung entgegengesetztes elastisches Reaktionsmoment erzeugt.

Es kann vorgesehen sein, dass die Reaktionsvorrichtung eine Kombination von unterschiedlichen Drehmomenterzeugungsmitteln aufweist. So können beispielsweise unterschiedliche Bremsvorrichtungen und/oder Speichereinrichtungen eingesetzt sein, summiert werden, beispielsweise Reibungsvorrichtungen und Federspeicher. Die Passivmomente der einzelnen Drehmomenterzeugungsmittel zumindest teilweise überlagert bzw. summiert werden, und zusätzlich oder alternativ unabhängig voneinander einzeln aktiviert werden. Dadurch wird eine optimierte Anpassung des von der Reaktionsvorrichtung erzeugten Passivmoments ermöglich, wodurch die vorgenannten Vorteile weiter ausgebaut werden können.

Es ist möglich, dass die Reaktionsvorrichtung verstellbar ist. Dadurch kann die Wirkung der passiven Drehmomenterzeugungsmittel verändert und angepasst werden. Die Verstellung kann als Einstellung zur Kalibrierung der passiven Drehmomentcharakteristik bei der Fertigung erfolgen. Es ist auch denkbar, das Passivmoment während des Betriebs verstellen zu können, um das manuelle Lenkgefühl an Fahrsituationen anzupassen, beispielsweise an die Fahrgeschwindigkeit. Beispielsweise kann die Bremskraft einstellbar sein, manuell oder gesteuert. Es kann zusätzlich oder alternativ eingestellt werden, ob oder welcher Teil des in die Lenkhandhabe eingebrachten Handmoment in einer Speichervorrichtung gespeichert wird. Vorteilhaft ist in jedem Fall, dass erweiterte Möglichkeiten zur Ausgestaltung des Feedback-Moments geschaffen werden

Es kann vorgesehen sein, dass die Reaktionsvorrichtung eine zumindest abschnittweise lineare und/oder progressive und/oder degressive Drehmomenten-Kennlinie aufweist. Die Drehmomenten-Kennlinie gibt das passive Reaktionsmoment in Abhängigkeit von dem in die Lenkhandhabe eingegebenen manuellen Handmoment an. Dabei kann das Passiv- oder Reaktionsmoment dem Handmoment entgegen gerichtet sein, beispielsweise als Bremsmoment, oder auch in Richtung des Handmoments wirken, beispielsweise durch die Federkraft eines zuvor durch das manuelle Handmoment gespannten Speichereinrichtung, wie beispielsweise einen Federspeicher. Dadurch kann das Reaktionsmoment mit einem als Lenkbefehl eingegebenen Drehwinkel, entsprechend einem absoluten Lenkeinschlag, linear gleich bleiben, oder ansteigen, oder abfallen. Dadurch ist in vorteilhafter Weise eine flexible Anpassung des manuellen Lenkgefühls möglich. Außerdem kann der Energieverbrauch der aktiven Antriebsvorrichtung optimiert und minimiert werden.

Es ist möglich, dass die Reaktionsvorrichtung geschwindigkeitsabhängig ausgestaltet ist. Dabei kann die Höhe des Feedback-Moments an eine momentane Lenkeingabe angepasst werden. Das Reaktionsmoment kann beispielsweise bei einer höheren Drehgeschwindigkeit der manuellen Lenkeingabe, also des Handmoments, ansteigen. Einer schnellen, ruckartigen Lenkbewegung der Lenkhandhabe wirkt dann ein stärkeres Reaktionsmoment entgegen, als einer langsameren Lenkbewegung.

Zwischen der Antriebsvorrichtung und der Reaktionsvorrichtung kann ein Drehsensor angeordnet sein. Der Drehsensor kann einen Winkelsensor zur Erfassung einer Winkelposition der Lenkhandhabe aufweisen, und zusätzlich oder alternativ einen Drehmomentsensor zur Messung ein momentan an der Lenkhandhabe anliegenden Handmoments. Anhand der Winkel- und/oder Drehmomentmesswerte kann in vorteilhafter Weise eine situationsbedingt angepasste Ansteuerung der Drehmomenterzeugungseinrichtung erfolgen.

Es ist möglich, dass die Lenkhandhabe und die Drehmomenterzeugungseinrichtung mit einer drehbar in einer Manteleinheit gelagerten Lenkwelle verbunden sind. Die Lenkwelle kann als Lenkspindel in der Manteleinheit einer Lenksäule ausgebildet sein. Zur Einstellung der Position der Lenkhandhabe kann die Manteleinheit bevorzugt in Längs- und/oder Höhenrichtung verstellbar sein. Die aktive Antriebsvorrichtung und die passive Reaktionsvorrichtung können wirkungsmäßig an die Lenkwelle angekoppelt sein.

Eine Ausführung der Erfindung kann vorsehen, dass die Drehmomenterzeugungseinrichtung mit der Lenkhandhabe integriert ausgebildet ist. Die Lenkhandhabe kann eine Nabe und als manuelles Eingabemittel einen relativ dazu drehbaren Lenkradkranz, Handgriff oder dergleichen umfassen. Das Feedback-Moment kann ganz oder teilweise zwischen der Nabe und dem Lenkradkranz eingekoppelt werden. Es ist möglich, dass eine aktive, motorische Antriebseinheit in die Lenkhandhabe integriert ist, und zusätzlich oder alternativ eine Reaktionsvorrichtung. Dies ermöglich eine vorteilhaft kompakte Bauweise und eine flexible Nutzung des im Fahrzeug zur Verfügung stehenden Bauraums.

Bei einem Lenksystem für ein Kraftfahrzeug, umfassend eine um eine Längsachse drehbar gelagerte Lenkhandhabe zur Eingabe manueller Lenkbefehle, und umfassend einen Feedback-Aktuator zur Erzeugung eines auf die Lenkhandhabe wirkenden Feedback-Moments, ist erfindungsgemäß vorgesehen, dass der Feedback-Aktuator ausgestaltet ist gemäß einer der vorangehend beschriebenen Ausführungen, oder Kombinationen der beschriebenen Merkmale. Dadurch können die genannten Vorteile realisiert werden, wie beispielsweise eine erhöhte Betriebssicherheit und ein reduzierter externer Energieverbrauch. Durch den geringeren elektrischen Energieverbrauch ist der Einsatz in Elektrofahrzeugen besonders vorteilhaft.

Bei dem Lenksystem kann bevorzugt vorgesehen sein, dass die Lenkhandhabe mit einem Drehsensor zusammenwirkt, der an eine Steuereinrichtung angeschlossen ist, die ausgebildet ist zur Erzeugung von Steuersignalen zur Ansteuerung von mit lenkbaren Rädern zusammenwirkenden Lenkaktuatoren.

Ein Verfahren zur Erzeugung eines Lenkungs-Feedbacks in einem Kraftfahrzeug-Lenksystem, bei dem zur Eingabe eines Lenkbefehls ein manuelles Handmoment auf eine um eine Längsachse drehbar gelagerten Lenkhandhabe zur Drehung der Lenkhandhabe ausgeübt wird, und bei dem von einem Feedback-Aktuator auf die Lenkhandhabe ein Feedback-Moment ausgeübt wird, sieht erfindungsgemäß vor, dass das Feedback-Moment als Kombination aus einem aktiven Antriebsmoment und einem passiven Reaktionsmoment gebildet wird, wobei das aktive Antriebsmoment durch externe Energiezufuhr von einer aktiven Antriebsvorrichtung bereitgestellt wird, und das passive Reaktionsmoment aus einem in die Lenkhandhabe eingegebenen manuellen Handmoment erzeugt wird.

Bei dem erfindungsgemäßen Verfahren wird ein Feedback-Moment abhängig von der Fahrsituation und weiterer Betriebsparameter bestimmt und zur Simulation einer mechanischen Rückwirkung in eine drehbare Lenkhandhabe eingekoppelt, beispielsweise in ein Lenkrad. Dazu können von einer Drehmomenterzeugungseinrichtung Bremsmomente und gegebenenfalls Antriebsmomente erzeugt, welche einem in die Lenkhandhabe als Lenkbefehl eingegebenen Handmoment bremsend entgegenwirken, oder dieses verstärken können. Während im Stand der Technik eine aktive Antriebsvorrichtung mit einem elektromotorischen Antrieb vorgesehen ist, welche in jeder Fahrsituation das gesamte, in die Lenkhandhabe eingekoppelte Gesamt-Feedback-Moment aus extern zugeführte Energie erzeugt, bevorzugt durch elektrischen Strom, wird erfindungsgemäß zumindest ein Teil des Feedback-Moments aus einem passiven Reaktionsmoment erzeugt, welches dem Handmoment entgegen gerichtet ist. Die Höhe und der Verlauf dieses Passivmoments können angepasst werden, wie dies weiter oben im Zusammenhang mit der Ausgestaltung einer erfindungsgemäßen Reaktionsvorrichtung bereits beschrieben ist.

Das erfindungsgemäße Verfahren zeichnet sich dadurch aus, dass aktive, durch Zuführung externer Energie generierte Antriebsmomente und über die Lenkhandhabe manuell eingegebene Handmomente durch Summierung und Überlagerung kontrolliert und zielgerichtet kombiniert und genutzt werden, um ein realitätsnahes Lenkgefühl zu erzeugen. Wie oben erläutert kann dies bevorzugt durch Einsatz von angepassten Brems- und/oder Speichereinrichtungen erfolgen, um eine bestimmte passive Feedback-Charakteristik zu realisieren. Ein Vorteil dabei ist, dass lediglich der Anteil des als Sollwert errechneten Gesamt-Feedback-Moments, der nicht passiv als Reaktion auf das Handmoment generiert werden kann, durch die aktive Antriebsvorrichtung zur Verfügung gestellt werden muss. Daraus resultieren die Vorteile, dass die aktive Antriebsvorrichtung kleiner und leichter dimensioniert und der Energieverbrauch reduziert werden.

Durch die aktive Antriebsvorrichtung kann in jeder Fahr- und Betriebssituation eine hohe Reaktionsgeschwindigkeit gewährleistet sein, falls aktuell kein ausreichendes Passivmoment für die Erzeugung des Feedback-Moments zur Verfügung steht. Das Passivmoment kann zumindest teilweise in Richtung eines aktiv generierten Antriebsmoments gerichtet sein. Beispielsweise kann es als Bremsmoment gegen ein in die Lenkhandhabe eingegebenes Handmoment gerichtet sein, welches bei Bedarf durch ein zusätzliches Aktivmoment verstärkt werden kann. Alternativ kann das Passivmoment auch entgegen der Richtung eines aktiv generierten Antriebsmoments gerichtet sein. Dadurch kann beispielsweise eine Bremswirkung des Passivmoments durch eine Antriebswirkung des aktiven Antriebs teilweise oder ganz neutralisiert werden, so dass das in Summe anstehende Gesamt-Feedback-Moment verringert wird.

Vorzugsweise kann das passive Reaktionsmoment als Grundmoment zur Verfügung gestellt werden, dem das Antriebsmoment überlagert wird. Das Grundmoment kann bevorzugt größer als 1 Nm sein. Es kann mit Vorteil kleiner als 4 Nm sein.

Durch das Passivmoment kann ein in die Lenkhandhabe eingegebenes Handmoment gebremst werden.

Es ist möglich, dass das in die Lenkhandhabe eingegebene Handmoment in einer Speichervorrichtung gespeichert wird, beispielsweise durch Spannung eines Federspeichers, und danach zur Verstärkung eines in die Lenkhandhabe eingegebenen Handmoments wieder abgegeben wird. Dies kann erfolgen, ohne dass der aktiven Antriebsvorrichtung extern Energie zugeführt werdend muss, so dass es sich ebenfalls um ein Passivmoment im Sinne der Erfindung handelt.

Das Passivmoment kann gemäß einer zumindest abschnittweise linearen und/oder progressiven und/oder degressiven Drehmomenten-Kennlinie bereitgestellt werden. Die Drehmomenten-Kennlinie kann wie oben zur Reaktionsvorrichtung erläutert ausgestaltet sein.

Das Passivmoment kann gemäß einem fest vorgegebenen Verlauf vorgegeben werden, oder abhängig von im Betrieb ermittelten Parameterwerten variabel eingestellt werden.

Weiterhin kann das Passivmoment geschwindigkeitsabhängig vorgegeben werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine Teilansicht eines Längsschnitts durch die Lenksäule gemäß Figur 1,
- Figur 3: einen Längsschnitt durch die Lenksäule gemäß Figur 1,
- Figur 4: eine vergrößerte Detailansicht aus Figur 3,
- Figur 5: eine weitere vergrößerte Detailansicht aus Figur 3,
- Figuren 6a-d: schematische Feedback-Moment (M)-Drehwinkel (ϕ)-Diagramme verschiedener Feedback-Kennlinien.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

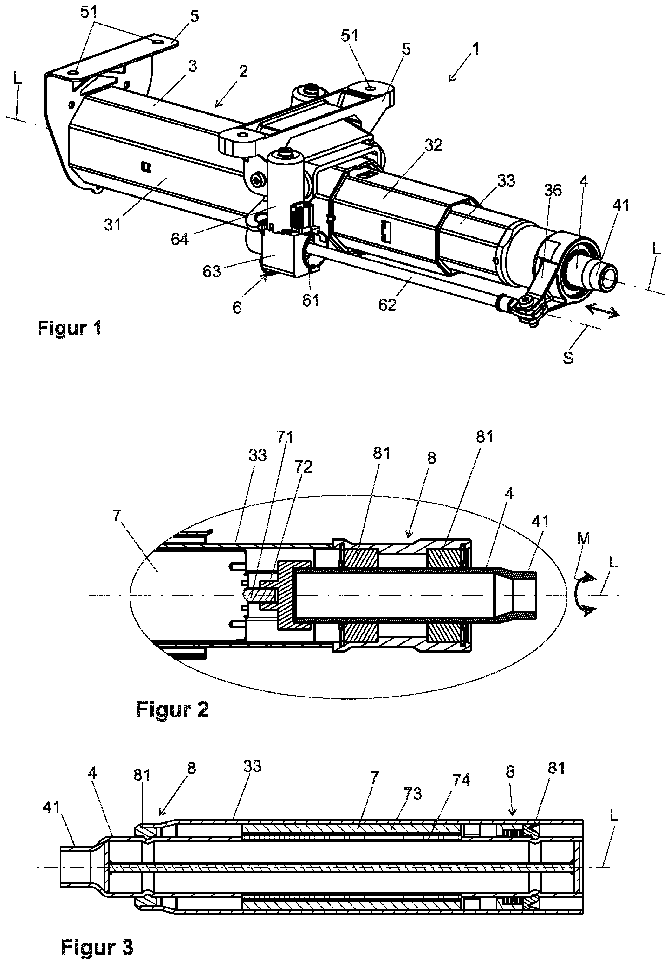

Figur 1 zeigt eine erfindungsgemäße Lenksäule 1, die eine Stelleinheit 2 aufweist, in einer Ansicht bezüglich der Fahrtrichtung von schräg hinten dargestellt.

Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind axial, in Achsrichtung einer Längsachse L, koaxial ineinander teleskopierend verstellbar angeordnet, wie mit einem Doppelpfeil angedeutet.

In dem Mantelrohr 33 ist eine Lenkwelle 4, auch als Lenkspindel 4 bezeichnet, um die Längsachse L drehbar gelagert, die an ihrem hinteren Ende einen Anschlussabschnitt 41 zur Anbringung einer nicht dargestellten Lenkhandhabe aufweist, beispielsweise eines Lenkrads.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 zur teleskopierenden Längsverstellung weist einen Spindeltrieb mit einer Spindelmutter 61 und einer darin eingeschraubten Gewindespindel 62 auf, die in einer Antriebseinheit 63 von einem elektrischen Motor 64 relativ zueinander drehend antreibbar sind. Die Gewindespindel 62 bildet eine Koppelstange, die sich entlang ihrer Spindelachse S, welche die Koppelachse darstellt, parallel zur Längsachse L erstreckt. Die Gewindespindel 62 ist an ihrem freien Ende an einem Arm 34 drehfest und axial fest abgestützt mit dem Innenmantelrohr 33 verbunden, und die Spindelmutter 61 stützt sich über die Antriebseinheit 63 axial, d.h. in der Längsrichtung, an dem Außenmantelrohr 31 ab. Die Längsrichtung entspricht der Richtung der Längsachse L. Durch eine relative Drehung mittels des Motors 64 werden die Gewindespindel 62 und die Spindelmutter 61 je nach Drehrichtung zusammen oder auseinander bewegt, wodurch das Innenmantelrohr 33 axial in das Zwischenmantelrohr 32, und dieses in das Außenmantelrohr 31 eingefahren oder ausgefahren wird, wie mit dem Doppelpfeil angedeutet. Dadurch kann ein an dem Anschlussabschnitt 41 angebrachtes Lenkrad nach vorn in eine Verstauposition gebracht werden, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ könnte sich die Spindelmutter 61 an dem Innenmantelrohr 33, und die Gewindespindel 62 an dem Außenmantelrohr 31 abstützen.

Figur 2 zeigt einen Längsschnitt entlang der Längsachse L in einer Teilansicht im hinteren, in Figur 1 rechts liegenden Endbereich.

In dem Mantelrohr 33 ist eine aktive Antriebsvorrichtung 7 bezüglich der Längsachse L drehfest angebracht. Diese wird gleichbedeutend auch als Feedback-Antrieb 7 bezeichnet und weist eine von einem elektrischen Motor um die Längsachse L drehend antreibbare Motorwelle 71 auf, die über eine Wellenkupplung 72 mit der Lenkwelle 4 (Lenkspindel 4) gekuppelt ist. Durch zugeführte elektrische Energie kann die Antriebsvorrichtung 7 ein aktives Feedback-Moment A (Aktivmoment) in die Lenkwelle 4 einkoppeln.

Mit dem Mantelrohr 33 ist eine erfindungsgemäße Reaktionsvorrichtung 8 verbunden. Diese weist eine Friktionseinrichtung auf, die zwei mit axialem Abstand angeordnete Reibungselemente 81 umfasst. Die Reibungselemente 81 sind bezüglich Drehung um die Längsachse L fest an dem Mantelrohr 33 festgelegt, und liegen im Reibkontakt gegen den äußeren Umfang der Lenkwelle 4 an. Die Reibungselemente 81 können beispielsweise als hohlzylindrische Buchsen ausgebildet sein, in dem die Lenkwelle 4 mit einem durch die Reibkraft definierten Bremsmoment um die Längsachse L drehbar gelagert ist. Dadurch wird ein passives Feedback-Moment M (Passivmoment) am Anschlussabschnitt 41 zur Verfügung gestellt, welches bei der Eingabe eines manuellen Lenkbefehls durch ein Handmoment zur Drehung der Lenkwelle 4 überwunden werden muss. Unabhängig von einem durch die aktive Antriebsvorrichtung 7 erzeugten Aktivmoment kann durch die Reaktionsvorrichtung 8 ein Reibmoment ohne zusätzliche externe Energiezufuhr als Passivmoment zur Verfügung gestellt werden.

Die Reibungselemente 81 sind bevorzugt aus einem Material gefertigt, welches eine definierte Reibpaarung mit dem Material der Lenkwelle 4, üblicherweise ein metallischer Werkstoff wie Stahl, ermöglicht. Das Material der Reibungselemente 81 ist relativ dazu weicher, und kann beispielsweise bevorzugt einen Kunststoff umfassen.

Figur 3 zeigt eine weitere Ausführungsform, ebenfalls im Längsschnitt ähnlich Figur 2. Die Antriebsvorrichtung 7 ist als Direktantrieb ausgebildet, der einen in dem Mantelrohr 33 fixierten Stator 73 umfasst, der einen direkt an der Lenkwelle 4 angebrachten Rotor 74 umgibt.

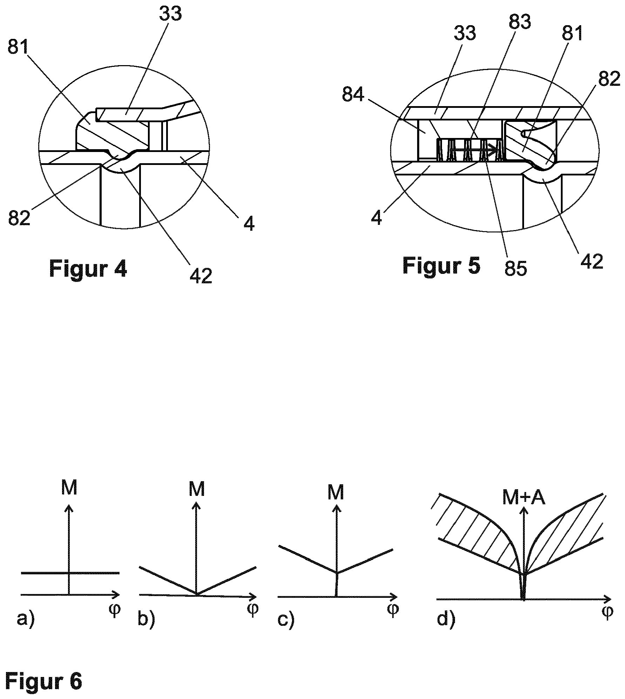

Es sind zwei, bevorzugt ringförmige Reibelemente 81 vorhanden, in denen die Lenkwelle 4 mit einem definierten Reibmoment drehbar gelagert ist. Dabei ist das in der Darstellung links liegende Reibelement 81 einfach reibschlüssig im Umfangsspalt zwischen dem Mantelrohr 33 und der Lenkwelle 4 eingesetzt, wie in der Detailansicht von Figur 4 vergrößert dargestellt ist. Das Reibelement 81 kann aus einem elastischen Material, beispielsweise einem Kunststoff oder Gummiwerkstoff, gefertigt sein. Um einen sicheren axialen Sitz zu gewährleisten, kann es mit einem radialen Vorsprung 82 formschlüssig in eine korrespondierende, umlaufende Vertiefung 42 außen in der Lenkwelle 4 eingreifen.

Das andere Reibelement 81 ist vergrößert in Figur 5 gezeigt. Darin ist erkennbar, dass eine Vorspannvorrichtung 83 vorgesehen ist, welche eine axiale Vorspannkraft auf das Reibelement 81 ausübt. Dadurch wird dieses in dem Ringspalt zwischen Lenkwelle 4 und Mantelrohr 33 elastisch gestaucht und dadurch radial aufgespreizt, und die radiale Pressung und damit das Reibmoment werden erhöht. Die Vorspannvorrichtung 83 weist ein axial an dem Mantelrohr 33 fixiertes Widerlager 84, und ein axial dagegen abgestütztes Federelement 84 auf, beispielsweise eine metallische Feder. Die Reibkraft und damit das Passivmoment kann einfach und definiert durch die axiale Vorspannung mittels der Vorspannvorrichtung 83 vorgegeben werden.

In den Diagrammen von Figur 6 a) bis c) sind unterschiedliche mögliche Verläufe des Passivmoments M über dem Drehwinkel ϕ aufgetragen.

Figur 6a) zeigt ein konstantes Passivmoment, welches durch Reibungselemente 81 erzeugt werden kann.

Figur 6b) zeigt ein linear von der Nullpunktlage ansteigendes Passivmoment, welches durch elastische Vorspannung eines Drehmomentspeichers erzeugt werden kann, beispielsweise eines Federspeichers.

Figur 6c) zeigt ein Passivmoment, welches durch Kombination von einer Reibungsvorrichtung gemäß Figur 6a) mit einer Speichervorrichtung gemäß 6c) erzeugt werden kann.

Figur 6d) zeigt mit der oberen, gebogenen Kurve ein kombiniertes Gesamt-Feedback-Moment, welches durch Summenbildung bzw. Überlagerung von Passivmomenten, welche in der unteren Kurve ähnlich zu Figur 6c) eingezeichnet sind, und einem von der aktiven Antriebseinrichtung 7 abgegebenen Aktivmoments A an der Lenkwelle 4 bereitgestellt werden kann. Dabei muss die Antriebseinrichtung 7 lediglich das schraffiert eingezeichnete Antriebsmoment zur Verfügung stellen, welches geringer ist als das erforderliche Gesamt-Feedback-Moment. Entsprechend wird weniger externe Energie benötigt, und die Antriebseinrichtung kann kleiner und leichter ausgestaltet werden und somit auch der Kraftstoffverbrauch des Kraftfahrzeugs reduziert werden.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34: Arm
- 4: Lenkwelle (Lenkspindel)
- 41: Anschlussabschnitt
- 42: Vertiefung
- 5: Trageinheit
- 51: Befestigungsmittel
- 6: Verstellantrieb
- 61: Spindelmutter
- 62: Gewindespindel
- 63: Antriebseinheit
- 64: Motor
- 7: Antriebseinrichtung
- 71: Motorwelle
- 72: Wellenkupplung
- 73: Stator
- 74: Rotor
- 8: Reaktionsvorrichtung
- 81: Reibelement
- 82: Vorsprung
- 83: Vorspannvorrichtung
- 84: Widerlager

- L: Längsachse
- S: Spindelachse
- M: Passivmoment
- ϕ: Drehwinkel
- A: Aktivmoment

## Patentansprüche

1. Feedback-Aktuator für ein Kraftfahrzeug-Lenksystem, umfassend eine um eine Längsachse (L) drehbar gelagerte Lenkhandhabe zur Eingabe manueller Lenkbefehle und einer Drehmomenterzeugungseinrichtung (7, 8), die ausgebildet ist zur Erzeugung eines auf die Lenkhandhabe wirkenden Feedback-Moments (M, A), und die eine an die Lenkhandhabe angekoppelte aktive Antriebsvorrichtung (7) aufweist,
**dadurch gekennzeichnet,**
**dass** die Drehmomenterzeugungseinrichtung (7, 8) eine passive Reaktionsvorrichtung (8) aufweist, die ausgebildet ist zur Erzeugung eines auf die Lenkhandhabe rückwirkenden Reaktionsmoments (M) aus einem in die Lenkhandhabe zur Eingabe eines Lenkbefehls eingebrachten Handmoments.

2. Feedback-Aktuator nach Anspruch 1, **dadurch gekennzeichnet, dass** die Reaktionsvorrichtung (8) ausgebildet ist zur Bereitstellung eines Grundmoments, und die Antriebsvorrichtung (7) ausgebildet ist zur Erzeugung eines Zusatzmoments, welches dem Grundmoment überlagerbar ist.

3. Feedback-Aktuator nach einem der vorangehenden Ansprüche, **dadurch gekennzeichnet, dass** die Reaktionsvorrichtung (8) eine Bremsvorrichtung (81) aufweist.

4. Feedback-Aktuator nach einem der vorangehenden Ansprüche, **dadurch gekennzeichnet, dass** die Reaktionsvorrichtung (8) eine Speichervorrichtung aufweist.

5. Feedback-Aktuator nach einem der vorangehenden Ansprüche, **dadurch gekennzeichnet, dass** die Reaktionsvorrichtung (8) eine Kombination von unterschiedlichen Drehmomenterzeugungsmitteln (81) aufweist.

6. Feedback-Aktuator nach einem der vorangehenden Ansprüche, **dadurch gekennzeichnet, dass** die Reaktionsvorrichtung (8) verstellbar ist.

7. Feedback-Aktuator nach einem der vorangehenden Ansprüche, **dadurch gekennzeichnet, dass** die Reaktionsvorrichtung (8) eine zumindest abschnittweise lineare und/oder progressive und/oder degressive Drehmomenten-Kennlinie aufweist.

8. Feedback-Aktuator nach einem der vorangehenden Ansprüche, **dadurch gekennzeichnet, dass** die Reaktionsvorrichtung (8) geschwindigkeitsabhängig ausgestaltet ist.

9. Feedback-Aktuator nach einem der vorangehenden Ansprüche, **dadurch gekennzeichnet, dass** zwischen der der Antriebsvorrichtung (7) und der Reaktionsvorrichtung (8) ein Drehsensor angeordnet ist.

10. Feedback-Aktuator nach einem der vorangehenden Ansprüche, **dadurch gekennzeichnet, dass** die Lenkhandhabe und die Drehmomenterzeugungseinrichtung (7, 8) mit einer drehbar in einer Manteleinheit (33) gelagerten Lenkwelle (4) verbunden sind.

11. Feedback-Aktuator nach einem der vorangehenden Ansprüche, **dadurch gekennzeichnet, dass** die Drehmomenterzeugungseinrichtung (7, 8) mit der Lenkhandhabe integriert ausgebildet ist.

12. Lenksystem für ein Kraftfahrzeug, umfassend eine um eine Längsachse (L) drehbar gelagerte Lenkhandhabe zur Eingabe manueller Lenkbefehle, und umfassend einen Feedback-Aktuator zur Erzeugung eines auf die Lenkhandhabe wirkenden Feedback-Moments (M+A),
**dadurch gekennzeichnet,**
**dass** der Feedback-Aktuator ausgestaltet ist nach einem der Ansprüche 1 bis 11.

13. Lenksystem nach Anspruch 12, **dadurch gekennzeichnet, dass** die Lenkhandhabe mit einem Drehsensor zusammenwirkt, der an eine Steuereinrichtung angeschlossen ist, die ausgebildet ist zur Erzeugung von Steuersignalen zur Ansteuerung von mit lenkbaren Rädern zusammenwirkenden Lenkaktuatoren.

14. Verfahren zur Erzeugung eines Lenkungs-Feedbacks in einem Kraftfahrzeug-Lenksystem (1), bei dem zur Eingabe eines Lenkbefehls ein manuelles Handmoment auf eine um eine Längsachse (L) drehbar gelagerten Lenkhandhabe ausgeübt wird, und bei dem von einem Feedback-Aktuator auf die Lenkhandhabe ein Feedback-Moment ausgeübt wird,
**dadurch gekennzeichnet,**
**dass** das Feedback-Moment als Kombination aus einem aktiven Antriebsmoment (A) und einem passiven Reaktionsmoment (M) gebildet wird, wobei das aktive Antriebsmoment (A) durch externe Energiezufuhr von einer aktiven Antriebsvorrichtung (7) bereitgestellt wird, und das passive Reaktionsmoment (M) aus einem in die Lenkhandhabe eingegebenen manuellen Handmoment erzeugt wird.

15. Verfahren nach Anspruch 14, **dadurch gekennzeichnet, dass** das passive Reaktionsmoment (M) als Grundmoment zur Verfügung gestellt wird, dem das Antriebsmoment (A) überlagert wird.
